(19) Europäisches Patentamt
European Patent Office
Office européen des brevets

(11) EP 4 681 541 A1

(12) **EUROPEAN PATENT APPLICATION**

(43) Date of publication:
21.01.2026 Bulletin 2026/04

(21) Application number: 24306212.2

(22) Date of filing: 18.07.2024

(51) International Patent Classification (IPC):
A21D 2/38 (2006.01)   C12C 1/00 (2006.01)
A21D 10/00 (2006.01)

(52) Cooperative Patent Classification (CPC):
A21D 2/38; A21D 10/002; C12C 1/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(72) Inventors:
• VELASQUEZ BARILLAS, Alejandra Paola
44000 Nantes (FR)
• LE BAIL, Alain
44300 Nantes (FR)
• NORWOOD, Eve Anne
56350 Saint-Vincent-sur-Oust (FR)
• SAULNIER, Luc
44000 Nantes (FR)

(71) Applicants:
• Oniris
44300 Nantes (FR)
• Institut National de la Recherche pour
l'Agriculture, l'Alimentation et l'Environnement
75007 Paris (FR)
• Nantes Université
44000 Nantes (FR)
• Centre National de la Recherche Scientifique
75016 Paris (FR)

(74) Representative: Novagraaf Technologies
Bâtiment O2
2, rue Sarah Bernhardt
CS90017
92665 Asnières-sur-Seine Cedex (FR)

(54) **MODIFIED MALTED PROCESS TO PRODUCE MALTED FLOUR AS BIOSOURCE OF MALTOGENIC ENZYMES-MODIFIED MALTED FLOUR**

(57) The invention concerns a modified malted process to produce malted flour as biosource of modified-maltogenic-enzymes-malted flour, and its use.

FIGURE 1

## Description

### Technical field of the invention

The invention concerns a modified malted process to produce malted flour as biosource of modified-maltogenic-enzymes-malted flour, and its use.

The invention finds an application in the field of bakery.

In the description below, references in square brackets ([ ]) refer to the list of references at the end of the text.

### State of the art

Currently, the use of enzymes has become of interest to the food industry, as they present different activities that can improve the nutrient content availability and/or the product's quality. Grains (and by the way flour) naturally contains some enzymes which may have some positive effect with respect to the challenges of baked product such as staling rate; they also can influence the flour pasting and rheological properties (Collado et Corke 1999) [1]. However, their effect depends on several parameters such as the climatic conditions during plant growth, the grains maturity, the storage conditions, among other variables such as temperature, pH and water activity (Feillet 1996) [2]. These enzymes are active during the baking process, but have limited functionalities. Nonetheless, it is possible to boost these functionalities and activity by converting the grains into a functional ingredient as a "malted flour". The malting process consists in three main steps that are the steeping (imbibition of the grains), the germination and the kilning (drying). During germination, many enzymes are activated such as $\alpha/\beta$-amyiases, maltogenic-amylases, endo-$\beta$-glucanases, xylanases, lipases, proteases, and phytase. They appear with a given chronology with the objective of converting the grain to a plant.

The malting process will vary according to the application, destined either for brewing and distillation industry or destined for baking industry. The former one uses the malting processes to develop a high level of amylase activity in order to reach a high conversion yield of starch's biopolymers to alcohol (in addition to other parameters such as colouring, foaming...). The latter one uses malting process to deliver malted flour where specific objectives and challenges can be addressed, such as final bread colour and/or improved volume. Conventional malted flour has been studied as well to aid with staling rate as it is rich in $\beta$ and $\alpha$ amylases whose synergic action confers softness through the starch hydrolysis (Cauvain 2015) [3]. However, an excessive stickiness can occur due to an extended starch hydrolysis leading to high levels of dextrin. The maltogenic $\alpha$-amylases primarily differ from $\alpha$-amylases due to its mode of attack. On the one hand the maltogenic $\alpha$-amylases mainly hydrolyses the starch through an exo-attack thus giving as a main product $\alpha$-maltose (Christophersen et al. 1998; Bowles 1996; Gray et Bemiller 2003) [4-6]. Its peculiar mechanism of action hinders the formation of double helices and preserving the amylopectin backbone (Gray et Bemiller 2003; Lai et Lin 2006) [6,7]. Hence, they are able to partially hydrolyse starch and produce low molecular weight dextrin (Chen et al. 2021) [8]. Moreover, they present a higher heat resistance (up to 90°C) than fungal (Cauvain 2015) [3] and $\alpha$- or $\beta$-amylase (60-70°C) (Herz 1965; Potus, 1997) [9,10], thus capable of hydrolysing the starch into maltose at higher temperatures without releasing reducing sugars along with excess of colour changing caused by Maillard reactions. On the other hand the $\alpha$-amylases hydrolyses the starch with an endo-attack, through a random attack in the glycosidic linkages and continues until the reaction products have a length of 10-20 glucose units, where dough handling properties is at risk due to stickiness problems (Horváthová, Janeček, et Šturdík 2000; Khattak et al. 2014; Lai et Lin 2006) [11,12,7]. Thus maltogenic $\alpha$-amylases, in contrast to conventional $\alpha$-amylase, have a significant impact on the recrystallization of amylopectin, hindering as well the concomitant network formation and water immobilization (Hans Goesaert et al. 2009) [13]. Therefore, thinking to the case of malted flour applied to baking, the malting process must be reconsidered to adjust the enzymatic activity.

### Description of the invention

The interest diverges to have a malted flour as a biosource of maltogenic $\alpha$-amylase for the application in baked goods. To achieve this targeted malted flour, a modified malting process is proposed with the incorporation of a hydrothermal treatment step applied to the sprouted grains (green-malt) prior their drying process (malted-grains). In this case, instead of a physical separation, the thermal treatment will favour the targeted enzyme and inactivate the other enzymes. Thus, time and temperature are keys to deliver a functional ingredient rich in maltogenic amylases that could aid with technological parameters in baked products, more specifically as an antistalling ingredient.

Industrial malted flours have been used to deliver a softer texture or a higher volume, but no studies have been yet done on targeting the enzymes. The modified malting process will enable the industry to have a more standard malted flour that could present specific functionality such as antistaling effect.

Thus the present invention relates to a malting method for producing a malted flour that is rich in maltogenic enzymes, said method comprising the steps of:

a) hydration of grains;

b) germination of hydrated grains;

c) hydrothermal treatment of germinated grains in water at a temperature ranging from 70 to 90°C and during 1 to 15 minutes;

d) drying the hydrothermally treated grains;

e) grinding the dry germinated grains to obtain a maltogenic enzyme-enriched malted flour flour, and optionally bran removal of the grains.

According to a particular embodiment of the present invention, step a) is carried out by 3 stages, all ran at a temperature of 18.5 °C, which are 1. a steeping step during which the grains are immersed in water during 4 hours, 2. a dry step, or aeration step, during which the grains are outside the water and kept moist during 15 hours, and 3. a second steeping step during 3 hours.

According to a particular embodiment of the present invention, step b) is carried out for 4 to 8 days at a temperature of 18°C.

According to a particular embodiment of the present invention, step d) is carried out at a temperature ranging from 40 to 82°C during 14 hours.

The present invention also relates to a maltogenic enzyme-enriched malted flour obtained by a malting method of the present invention, wherein said malted flour contains 10.36 ± 3.92 to 18.32±0.66 U/g of starch of maltogenic enzymes, in particular of maltogenic α-amylases.

The present invention also relates to the use of a maltogenic enzyme-enriched malted flour of the present invention, for producing a pre-dough (an intermediate dough before making a final dough).

The present invention also relates to a method for implementing the method of the present invention for producing a pre-dough, said method comprising the steps of:

a) mixing 10% of starch with excess of water at a temperature ranging from 55 to 65°C during 30 to 60 minutes;

b) mixing 0,3% of maltogenic enzyme-enriched malted flour obtained by the method according to any one of claims 1 to 4 to the gelatinized starch of step a) at a temperature ranging from 55 to 65°C for a minimum of 80 minutes, to produce the pre-dough.

According to a particular embodiment of the present invention, said method for implementing the method of the present invention further comprises the steps of:

c) adding the pre-dough of step b) to the rest of ingredients (namely remaining flour, water, salt and yeast in quantities well know to the skilled person), to produce a dough;

d) baking the dough at a temperature ranging from 220 to 350°C during 1 to 20 minutes, in particular at a temperature ranging from 220 to 230°C during 15 to 20 minutes, or at a temperature ranging from 300 to 350°C during 1 to 5 minutes, to produce the bakery product.

According to a particular embodiment of the present invention, the maltogenic enzymes are maltogenic α-amylases.

**Brief description of the figures**

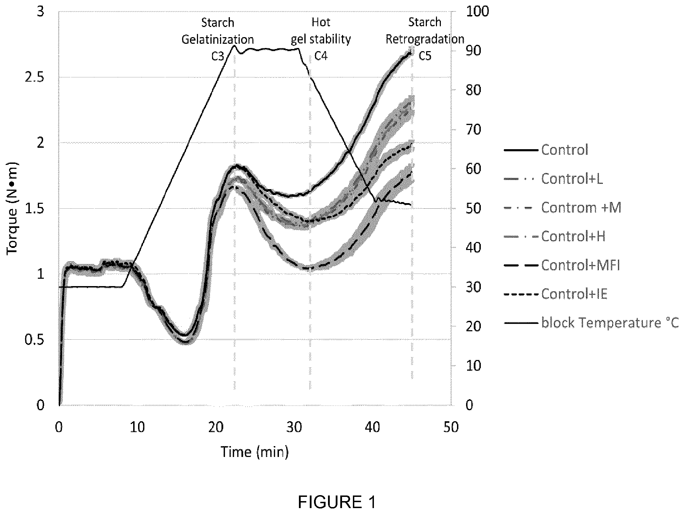

Figure 1 represents MIXOLAB dough pasting properties curves of dough samples under the influence of the addition of 1.34 U/g of flour of α-amylase enzyme from different sources: endogeneous enzymes L, M and H thermally treated samples, at 70, 75 and 80°C for 10 min; conventional malting process sample from industry (MFI) and exogenous source from industry (IE), curves displayed with their respective standard deviation.

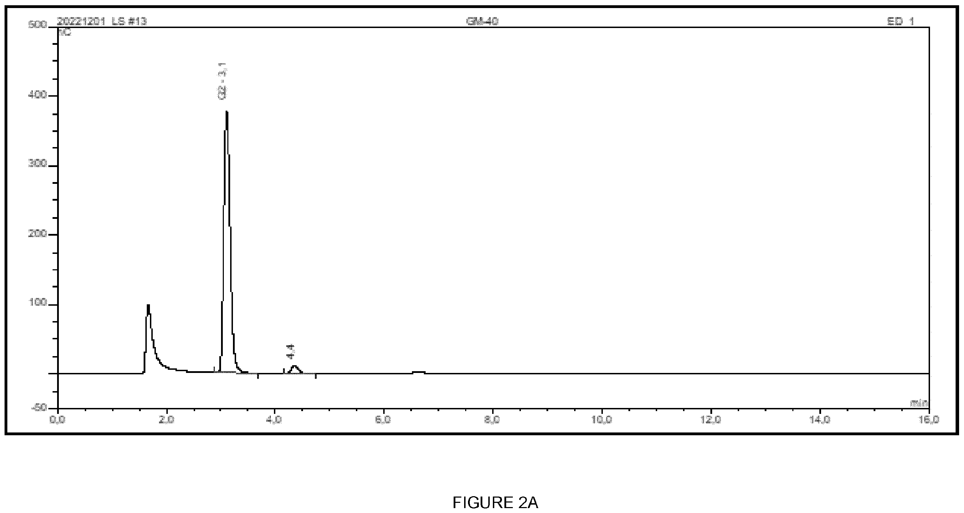

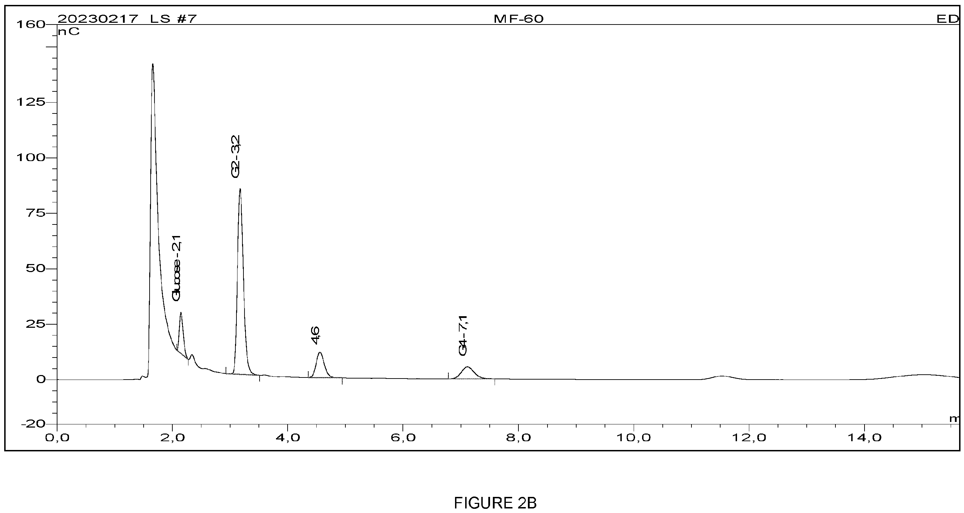

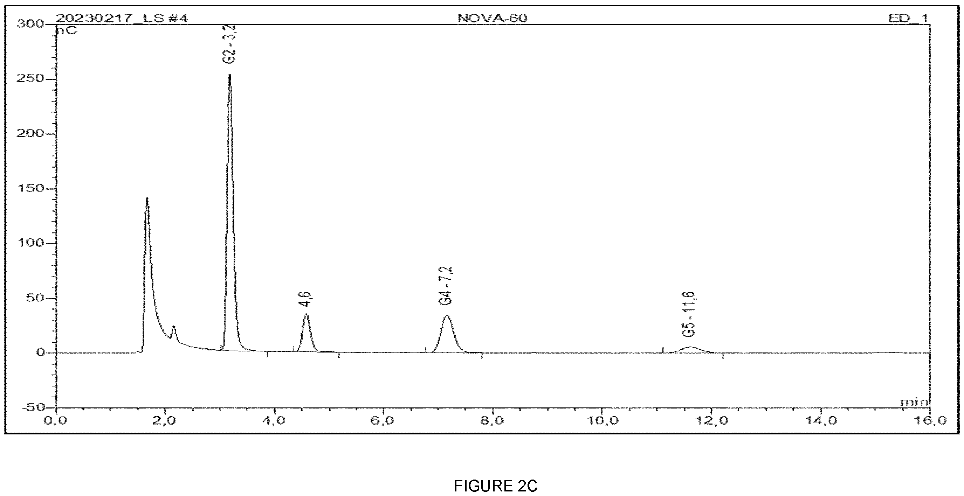

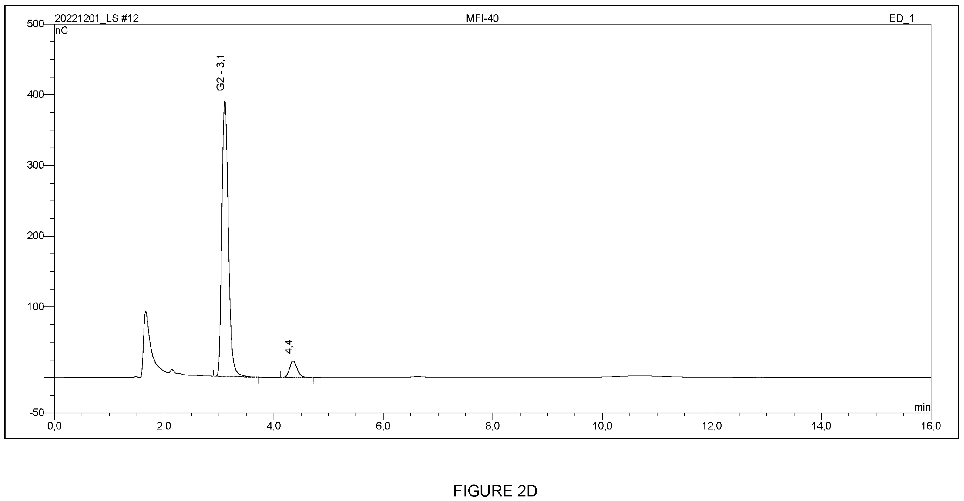

Figure 2 represents analysis of carbohydrates released from amylopectin degradation with different source of amylases : (A) amylases from green malt (GM) (freeze-dried), (B) Malted flour treated at 80°C - 10 min (H), (C) Exogenous maltogenic enzyme (IE), and (D) Malted flour from industry (MFI).

**EXAMPLES**

**EXAMPLE 1: MATERIAL AND METHODS**

1. Materials

Bio wheat grains and bio wheat malt from were provided by YEC'HED Malt Company (France, bruttany). The industrial amylases for analysis were Novamyl 3D G and Isoamylase (500 /mL) (Novozyme, Denmark). The amylopectin used for the degradation analysis was from maize (Sigma-Aldrich, Germany). To assess the enzymatic activity an Assay kit Megazyme-Malt Amylase was purchased (Megazyme, Ireland). All chemicals used were of reagent grade.

2. Modified Malting Process

1 kg of bio wheat grains (Bio grains, YEC'HED Malt) was treated through a modified malting process of four steps: steeping, germination, hydrothermal treatment and kilning. The two first steps were conducted in an environmental chamber, (INCU-Line 68R; VWR Geldenaasksbaan) to have a constant and controlled temperature of 18 °C. Steeping had three stages: two wets of 4 and 3 h duration, intercalated by one air stage of 15 h duration. For the wet step, the grains were immersed in 4L of distilled water and; on the air step the grains were left to rest out of the water with a manual hydration and agitation. After the end of the germination, the grains underwent a hydrothermal treatment by a direct immersion in hot distilled water. Three different setting parameters were tested 70 °C, 75 °C and 80 °C for 10 min, samples labelled as L, M and H respectively. Grains were cooled down with running distilled water after the treatment time elapsed. The kilning step was performed in a smoking cabinet (Arcos, France) programmed at a variable temperature from 40 - 82 °C for 14 hours the temperature-time configuration as proposed by Guo et al (2014) [14]. This drying process consisted of changing temperature every 2h at 40, 45, 50, 55 and 60 °C followed by 1 h interval at 65, 75, 78 and 82 °C. Samples were cooled at 20 °C followed by a milling and separation process to have a flour particle size of 0.2 mm. for analysis. A germinated control sample was lyophilized after germination process and labelled as Lyophilized Green Malt (LGM). Another control sample consisted in skipping the hydrothermal treatment and directly after germination step, the kilning process was performed; sample labelled as Kilned Green Malt (KGM). These two later samples were analysed for the enzymatic activity to assess the effect of the thermal treatment and drying step.

3. Enzymatic Activity

To assess the malted flour produced, an analytical kit from Megazyme was used, "Assay kit Megazyme-Malt Amylase". This assay procedure follows the BETAMYL-3® and CERALPHA® method as they are highly selective for β-amylase and highly specific for α-amylase respectively. The reaction absorbance was analyzed at 400 nm and the enzymes α and β-amylase were quantified by Equation 1 and Equation 2.

*Equation 1 Activity of α-amylase*

$$Units\ of\ \alpha-amylase\ /g\ of\ flour\ = \Delta E400 x 315.6$$

*Equation 2 Activity of β-amylase*

$$Units\ of\ \beta-amylase/\ g\ of\ flour = \Delta E400 x 19.7$$

*where ΔE400=absorbance (sample)-absorbance (blank)*

4. Dough Pasting Properties

To evaluate the impact of the regular malted flour and modified malted flours as a biosource of enzymes, the dough properties were assessed with Chopin+ protocol (MIXOLAB 2, Chopin technologies) which analyses 75 g of dough per essay. The protocol was run with an adapted hydration rate in order to reach a torque or $1.1 \pm 0.05$ Nm. The samples were added the same level of enzymatic units set at 1.3418 U, value corresponding to 0.3% (flour base) addition of the malted flour treated at 80 °C - 10 min. An exogenous maltogenic amylase (referred here as IE for Industrial Enzyme) commonly used to reduce the stailing rate in baked products, was also analysed as a reference sample; samples were also dosed at the same enzymatic units as previously mentioned.

5. Amylopectin Degradation and High Performance Anion Exchange Chromatography (HPAEC)

In order to initiate the starch degradation with amylase (PPA/maltogenic/malt extract), 100 mg amylopectin were dissolved in 5 mL ultrapure water by heating at 100 °C (30 min). Then the sample was incubated at 40 °C for 2 h with 0.2 U alpha-amylase (2 U/g amylopectin) from three different sources: green malt, malted flour treated at 80 °C - 10 min, and a commercial exogenous enzyme (maltogenic type). During the incubation time, 1 mL of the solution was withdrawn after 40 min and 60 min, and immediately exposed at 95 °C for 10 minutes to inactivate the enzymes. The sample was left to cool at ambient T. After cooling, 1 mL of 95% EtOH was added to the samples, eventually leading to the precipitation of amylopectin, and then they were stored overnight at 4°C. The supernatant and the partially degraded precipitated amylopectin were separated by centrifugation (10 min; 15,000g). The same procedure was followed with the remaining 3 mL at the end of two hours of incubation. The samples were exposed for 10 min at 95 °C to inactivate the enzymes. After cooling, 3 mL of 95% EtOH were added to the samples and were stored overnight at 4 °C. A centrifugation step was performed under same previous conditions. Retrieved supernatant including 50% EtOH were stored at 4 °C until their analysis for Maltose (G2), Maltotriose (G3), Maltotetraose (G4) and Maltopentaose (G5) molecules. The precipitate was washed twice with 50% EtOH followed by a drying step over night at 40°C.

In addition to the prepared treated malted flours, two industrial samples were analysed as mean of comparison. One sample was an industrial malted flour (IMF) and the other sample was an Industrial maltogenic enzyme (IE).

6. Statistical Analysis

Analysis of variance (ANOVA) was applied using Statgraphics Centurion 19 software (statgraphics Technologiess, Inc; The plains, VA, USA). The Fisher's Least Significant Difference (LSD) were conducted to identify significant difference

($p < 0.05$) in the enzymatic activity of the treated malted flours at different temperatures and their effect on though properties.

**EXAMPLE 2: RESULTS**

1. Enzymatic Activity

*Table 1 Enzymatic activity of control samples and modified malted flours treated at different temperatures with ANO VA test ran to the modified malted flours*

|  | $\alpha$-amylase Units/g of flour | $\pm$ | $\beta$-amylase Units/g of flour | $\pm$ |
|---|---|---|---|---|
| **Control wheat grains (not germinated)** | -0.48 | 0.49 | 22.17 | 3.43 |
| **Control T80 flour** | 1.69 | 0.56 | 22.22 | 3.25 |
| **Lyophilized green malt (LGM)** | 82.22 | 13.63 | 18.36 | 8.79 |
| **Kilned Green malt (KGM)** | 48.95 | 20.71 | 14.08 | 8.26 |
| **70°C - 10 min (L)** | 21.34 [c] | 2.38 | 6.39[b] | 0.89 |
| **75°C - 10 min (M)** | 16.34[b] | 2.72 | 0.80[a] | 0.17 |
| **80°C - 10 min (H)** | 10.36[a] | 3.92 | 0.16[a] | 0.34 |
| **Industrial malted flour (MFI)** | 132.20 | 1.22 | 16.18 | 4.29 |

Statistically significant differences at the 95.0% confidence level (test applied only to L, H and M samples to assess the temperature effect of the treatments).

Table 1 displays the influence of germination process and the different temperature parameters on the enzymatic activity of wheat samples. The enzyme activity in non-germinated wheat grains and control T80 wheat flour presented higher values for $\beta$-amylase than $\alpha$-amylase of -22.17 U\g of dry flour and ~ 0, respectively. The level of $\alpha$-amylase enzymes increased from 0 to 82.22 $\pm$13.63 Units/g of flour (db) in the lyophilized green malt (LGM). The germination process followed in this research showed no effect on the increase of $\beta$- amylase activity, as values for control flour, non-germinated grains and the LGM were similar ranging from 18.336-22 units of $\beta$-amylase per gram of starch. The drying step of the green malt (KGM), showed a negative correlation between temperature and enzymatic activity. Values of $a$-amylase activity reduced up to 59.53% with a final value of 48.95$\pm$20.71 U/g dry flour compared to LGM. A significant difference regarding $\alpha$-amylase activity in the three treated malted flours was observed; however, only sample L, which was treated at 70 °C-10 min presented a significant difference of $\beta$-amylase activity from M and H samples, malted flours treated at 75 °C and 80 °C -10 min respectively. The samples that presented the higher enzymatic activity regarding $\alpha$-amylase was MFI,

sample that had a conventional malting process.

The germination process followed in this research showed an increase of $\alpha$-amylase activity, but not for $\beta$-amylase, these results are in agreement with previous findings reported in the literature for barley and wheat grains (Schmitt et Marinac 2008; Buttimer et Briggs 2000; A. K. Goswami, Jain, et Paul 1977) [15-17]. The latter result is in alignment with Buttimer et Briggs (2000) [16] who explains $\beta$-amylase is synthesized almost entirely during kernel development. From the enzymatic analysis, the germination process lead to a higher amount of amylases in the green malt (LGM) as reported by Ledley, et al. (2021) [18], especially $\alpha$-amylase enzymes which are not as thermostable as the maltogenic type (Herz 1965) [9]. Enzymes are heat sensitive and present different range of resistance where $\beta$-amylase < $\alpha$-amylase<maltogenic $\alpha$-amylase (Herz 1965) [9]. Hence, in order to control the type of amylase in the malted flour, a hydrothermal treatment was performed at three different temperatures, 70, 75 and 80°C, for a lapse of 10 minutes, followed by a step drying process commonly performed by the malting industries. It consists in an increasing temperature from 40°C to 82°C with different time intervals, referred as step drying process. Results showed a progressive decrease in the enzymatic activity as the heat treatment parameters increased. The thermal treatment applied to the grains is indirectly proportional to the grains enzymatic activity, as expected, the higher the thermal treatment is applied, the lower the enzymatic activity will be. Despite this decrease of enzyme activity from the hydrothermal treatment+drying step, the treated flours still showed significant and different values of $\alpha$-amylase enzymes among the three different modified malted flours. Under this study, the goal was to achieve the lowest $\beta$-amylases value and still preserving significant quantity of $\alpha$-amylase as an indicator of a higher concentration of maltogenic amylases. From the Table 1 results, the sample treated at 75 and 80°C - 10 min have higher probability of a more concentrated maltogenic amylases activity than the sample treated at 70°C - 10 min. Enzymatic results proved the possibility of influencing the final enzymatic activity through a thermal treatment incorporated to the malted process.

## 2. Dough Pasting Properties

Figure 1 shows the MIXOLAB curves of dough under the influence of different source of enzymes, where the starch pasting properties decrease the torque, thus a negative displacement of the treated dough is displayed. The sample with the addition of MFI presented the largest displacement in the starch parameters C3, C4 and C5.

Table 2 shows data for pasting properties parameters, with their respective statistical analysis indicating their significant difference. In the case of the starch gelatinization, C3 control is significantly different from the enzymes from an endogenous source, those from malted flours, but not different from the sample treated with an exogenous source with values of 1.83±0.00 and 1.82±0.00 N•m respectively. The C3 presented 4 homogeneous groups where the lowest first group was exhibited by MFI sample of 1.67±0.00 N•m. followed by a second group including H, M samples, and a third group L and H. The fourth group comprises control sample and IE. The starch gel stability-C4-, also presented four groups as C3 where the difference relies that IE is significantly different from control and belongs to the third group, indicating no significant difference between samples L, H and IE with values of 1.38±0.011.37±0.03 and 1.40±0.01 N•m respectively. Lastly, for the starch retrogradation parameter -C5-, 4 homogeneous groups where again presented where the first group a, presenting the lowest torque value is from sample with MFI, followed by group b with sample IE, the lower groups presented values of 1.78±0.06 and 2.00±0.03 N•m respectively. The third group includes the modified treated flours with values range from 2.28±0.05-2.33±0.03 N•m. and group fourth is constituted by the control sample presenting the highest value of 2.72 ±0.01 N•m.

*Table 2 Mixolab pasting properties values of dough samples under the influence of the addition of 1.34 U/g of flour of α- amylase enzyme from different sources, curves are displayed with their respective standard deviation*

| | | Control | ± | 70 ° C (L) | ± | 75°C (M) | ± | 80°C (H) | ± | Industrial Malted flour (MFI) | ± | Industrial enzyme (IE) | ± |
|---|---|---|---|---|---|---|---|---|---|---|---|---|---|
| (N•m.) | C1 | 1.09[b-c] | 0.01 | 1.10[c] | 0.00 | 1.07[a] | 0.01 | 1.07[a-b] | 0.02 | 1.08[a-b-c] | 0.01 | 1.10[c] | 0.02 |
| | C2 | 0.53[c] | 0.00 | 0.48[b] | 0.00 | 0.47[a-b] | 0.01 | 0.47[a] | 0.01 | 0.48[b] | 0.00 | 0.53[c] | 0.01 |
| | C3 | 1.83[d] | 0.00 | 1.74[c] | 0.00 | 1.72[b] | 0.01 | 1.73[b-c] | 0.01 | 1.67[a] | 0.00 | 1.82[d] | 0.00 |
| | C4 | 1.58[d] | 0.01 | 1.38[b-c] | 0.01 | 1.35[b] | 0.02 | 1.37[b-c] | 0.03 | 1.04[a] | 0.02 | 1.40[c] | 0.01 |
| | C5 | 2.72[d] | 0.01 | 2.33[c] | 0.03 | 2.28[c] | 0.05 | 2.30[c] | 0.05 | 1.78[a] | 0.06 | 2.00[b] | 0.03 |

a,b,c and d make reference to the homogeneous groups found when analysing each variable presented on each row, this indicates the significant difference between samples.

The thermally treated malted flour at 70, 75 and 80°C for 10 min were analyzed by their effect on the dough properties. To compare their effect properly, they were dosed based on an equivalent enzymatic concentration. Therefore, malted flour treated at 80°C - 10 min was added at 0.3% (flour base) to have 1.34 U of enzyme. The other samples also dosed accordingly to have the same units. In this way, no samples exceeded 0.3% addition. This percentage is the maximum allowed by the French Regulation (1993) [19] regarding the addition of malted flour so to be still classified as French bread (Decree n° 93-1074), these samples are thought to be richer with heat resistant amylases characterized by their dominant exo-attack. In order to compare the dough behaviour under the addition of the treated flours, two other doughs were analysed with the addition of two other sources of enzymes. One was malted flour from a company, which had not been thermally treated (MFI), thought to be rich in $\alpha$-amylase characterized by its endo-attack. The second sample, an exogenous source of enzymes that are usually added in the bread industry to increase bread shelf life, (IE) a source of maltogenic-amylases characterized by its exo-attack mechanism of action.

Figure 1 shows a negative displacement of the curves for the samples under the effect of enzymatic action. This displacement is in agreement with Codina et al, (2012) [20] who reported a significant effect of the MIXOLAB parameters under the effect of fungal amylase addition. This movement is thus, attributed to the effect of enzymes hydrolyzing a percentage of starch and giving as a result a dough with a modified starch properties identify by the parameters C3, C4 a,d C5. Even though the enzymes from different sources where added at the same $\alpha$-amylase concentration, the curves shift differently most probably to the mechanism of action as reported by Leman et al. (2005) [21] who studied maltogenic amylases impact on starch comparing endo and exo-attack mechanism. Our results are in agreement with the previous researchers' conclusions. The lowest torque was achieved with the dough with added malted flour from the industry, it is thought to be attributed to the action mechanism of the predominant amylases: $\alpha$- amylase. As this type of enzyme is characterized by an endo-attack where in the internal $\alpha$-1,4 linkages of glucose polymers. The random attack in the glycosidic linkages continues until the reaction products have a length of 10-20 glucose units (Horváthová, Janeček, et Šturdík 2000; Khattak et al. 2014) [11,12]. Leman et al. (2005) [21] reported an extensive viscosity reduction with endo-amylases more than the one seen with exo-amylases. The first case was attributed to the amylolysis giving less rigid granules with an increased swelling rate and more susceptible to disintegration. The second case, reported with small influence on the starch rheology and viscosity parameters as their mechanism of action is limited on gelatinized starch, they can only hydrolyze accessible starch, hence gelatinized or damaged one. Thus, this is an indicator of a different action mechanism; hence, the modified malted flours are thought to be richer in thermostable amylases, maltogenic type.

When comparing the behaviours of the doughs with addition of the thermally treated flours and that one from an endogenous source, IE, the displacements are more similar, but still significant differences regarding C3 and C5 corresponding to starch gelatinization and starch retrogradation respectively. On the one hand, the torque C3 had a lower torque value for the dough with thermally treated flours. Thus, high hydrolysis as the dough is heated up until it reaches 80°C at ~22 min, where the endogenous have their optimal activity at 60°C from which point starts decreasing reaching a 50% at 75°C and less than 30% at 80°C (Cauvain 2015) [3]. On the other hand, there was no significant difference regarding the starch retrogradation when comparing the three modified malted flours. In this case, IE presented lower C5 which translates to lower retrogradation rate. The enzymes from exogenous source tend to be more thermostable up to 95°C, where at 88°C 50% of the starting activity is retained. Hence the exogenous enzymes were still active during the protocols plateau of 90°C, inducing a lower torque on the last phase, and a greater impact on the starch retrogradation parameter creating a significant difference between the modified malted flours. The difference show the limitation of endogenic enzymes when it comes to temperature parameter vs the efficacy of the exogenous source that are more heat resistant, as reported by leman et al. (Leman et al. 2005) [21] indicating that maltogenic amylases main activity occurred at higher temperatures where the starch is gelatinized thus, more susceptible to enzyme's action. The differences between the two samples treated at 75 and 80°C, those that had significant difference of $\alpha$-amylase but not in $\beta$-amylase activity. When compared to IE, showed more similarities between sample treated at 80°C-10 min and IE, than the sample treated at 75°C. For our purposes, the Mixolab served as a quick and reliable way to analyse the effect of different amylases on the dough properties. It is important to note that the enzymatic behaviour and effect on the real product still needs to be explored to have a deeper insight on the functionalities in different baked products. From these results, it is then suggested to proceed with modified malted flour treated preferably at 80°C - 10 min as a BioSource of heat resistant amylases for possible baking application.

2. High Performance Anion Exchange Chromatography (HPAEC)

*Table 3 Comparison of the different carbohydrates released from the amylopectin hydrolysis, Glucose (G1), Maltose (G2), Maltotriose (G3), Maltotetraose (G4) and Maltopentaose (G5)*

|  | Industrial enzyme (IE) | 80 ° C (H) | MFI | Green Malt-freeze dried |
|---|---|---|---|---|
| **Time** | 40 |  |  |  |
| **Dilution** | 50 |  |  |  |
| **G1** | 5.6% | 9.9% | 0.0 | 0.0% |

(continued)

|  | Industrial enzyme (IE) | 80 ° C (H) | MFI | Green Malt-freeze dried |
|---|---|---|---|---|
| G2 | 66.9% | 72.0% | 93.5 | 96.6% |
| G3 | 12.6% | 11.8% | 6.5 | 3.4% |
| G4 | 12.4% | 6.3% | 0.0 | 0.0% |
| G5 | 2.5% | 0.0% | 0.0 | 0.0% |
| Σarea | 3409.2 nC*min | 291.8 nC*min | 2890.5 nC*min | 2676.2 nC*min |

Figure 2 shows the profile peaks where the exogenous maltogenic amylase (IE) presented a different carbohydrate products profile than the one seen with freeze dried green malt (GM) and MFI, while treated malted flour (H) shared the same peak profile as IE. For the four samples IE, GM, MFI and H, the predominant product was maltose with 96.6%, 93.5%, 66.9% and 72% respectively as shown in Table 3.

To make a better identification of the type of amylases that remains within the targeted malted flour treated at 80°C - 10 min, an amylopectin degradation was performed to analyse the carbohydrates released by the enzyme's hydrolysis. The reasoning comes from action mechanism of the maltogenic-$\alpha$-amylases presenting both an endo and exo-attack like $\alpha$-amylase and $\beta$-amylase respectively. This mechanism is not yet fully understood, but is thought to initially favour the exo-attack (Horváthová, Janeček, et Šturdík 2000; Khattak et al. 2014) [11,12]. The favoured behaviour enables the maltogenic-$\alpha$-amylases to contribute to the antistailing effect in baked food. It affects the recrystallization of amylopectin hindering as well the concomitant network formation and water immobilization (Hans Goesaert et al. 2009) [13].

Figure 2 shows the exogenous maltogenic amylase (IE) with a different carbohydrate products profile than the one seen with freeze dried green malt (GM) and MFI, while treated malted flour (H) shared the same peak profile as IE. The similar peak profile displayed by the treated MF and IE hints the efficacy of the thermal treatment on delivering a MFI which is rich in maltogenic enzymes. For the four samples IE, GM, MFI and H, the predominant product was maltose with 66.9%, 72%, 93.5% and, 96.6%, respectively as shown in Table 3. On the one hand, both GM and MFI samples presented a mix of native enzymes mainly $\alpha$ and $\beta$-amylase, which have different but complementary functions during the bread making process (Hoseney et Martin 1991) [22]. The maltose molecule was expected to be the main product produced by sample H (H. Goesaert et al. 2005; Synowiecki 2007) [23,24]. On the other hand, the H is rich in maltogenic-$\alpha$-amylase which mechanism of action initially favour's the exo-attack delivering mainly maltose as a product. This is corroborating the similar behaviour shown in the MIXOLAB between the thermal treated flours and IE. These results indicated that the thermal treatment served as means to control the enzymatic activity in the malted flour to have a source of maltogenic- $\alpha$-amylase. Even though the hydrolyzation rate of treated MF is not as efficient as the IE has predominant maltogenic action. These results indicate that the thermal treatment served as means to control the enzymatic activity in the malted flour to have a source of maltogenic- $\alpha$-amylase.

## Conclusion

The thermal treatment step incorporated to the malting process served as a way to produce malted flours that are rich in maltogenic amylases. From the parameters explored, the most suitable parameter combination was at 80°C - 10 min duration to deliver the targeted MF. The MF as a BioSource of heat resistant enzymes gave similar performance results when compared to an exogenous source of maltogenic type of amylases. From the performed analysis, a similar behaviour suggests that starch degradation from both sources of enzymes, is performed through the same mechanism of action, but at a different extend as seen in the pasting properties and amylopectin degradation profile. These results highlighted the limitation of an endogenous source vs exogenous source regarding their thermal stability. The thermally treated malted flour is a promising BioSource of heat-resistant enzymes that are extensively demanded on baked products to improve technological and sensorial properties.

## List of references

1. Collado, Lilia S., et Harold Corke. 1999. « Accurate estimation of sweetpotato amylase activity by flour viscosity analysis ». Journal of Agricultural and Food Chemistry 47 (3): 832-35. https://doi.org/10.1021/jf980432h.
2. Feillet, Pierre. 1996. Le grain de blé. INRA.
3. Cauvain, Stanley. 2015. Technology of Breadmaking. Cham: Springer International Publishing. https://doi.org/10.1007/978-3-319-14687-4.

4. Christophersen, Claus, Daniel Otzen, Barrie Norman, Soren Christensen, et Thomas Schafer. 1998. « Enzymatic Characterisation of Novamyl®, a Thermostable α-Amylase ». Starch 50: 39-45.

5. Bowles, L.K. 1996. Baked goods freshness : technology, evaluation, and inhibition of staling. Édité par Ronald E. Hebeda et H.F. Zobel. NY, USA: Marcel Dekker.

6. Gray, J.A., et J.N. Bemiller. 2003. « Bread Staling: Molecular Basis and Control ». Comprehensive Reviews in Food Science and Food Safety 2 (1): 1-21. https://doi.ora/10.1111/j.1541-4337.2003.tb00011.x.

7. Lai, H.-M., et T.-C. Lin. 2006. « Bakery Products: Science and Technology ». In Bakery Products, édité par Y. H. Hui, 3-68. Ames, Iowa, USA: Blackwell Publishing. https://doi.org/10.1002/9780470277553.ch1.

8. Chen, Yi, Severin Eder, Sidonia Schubert, Sarah Gorgerat, Elena Boschet, Livia Baltensperger, Elena Boschet, et al. 2021. « Influence of Amylase Addition on Bread Quality and Bread Staling ». ACS Food Science & Technology 1 (6): 1143-50. https://doi.org/10.1021/acsfoodscitech.1c00158.

9. Herz, Karl. 1965. « Staling of bread, a review ». Food Techonology, 90-103.

10. Potus, Jacques. 1997. « Study of enzymatic hydrolisis oxidation during kneading of dough made from soft wheat ».

11. Horváthová, Viera, Stefan Janeček, et Ernest Šturdík. 2000. « Amylolytic enzymes: their specificities, origins and properties » 55: 605-15.

12. Khattak, Waleed Ahmad, Mazhar UI-Islam, Muhammad Wajid Ullah, Shaukat Khan, et Joong Kon Park. 2014. « Endogenous Hydrolyzing: Isolation, Characterization, and Applications in Biological Processes ». In Polysaccharides, 1-38. Springer International Publishing. https://doi.org/10.1007/978-3-319-03751-6 55-1.

13. Goesaert, Hans, Louise Slade, Harry Levine, et Jan A. Delcour. 2009. « Amylases and bread firming - an integrated view ». Journal of Cereal Science 50 (3): 345-52. https://doi.org/10.1016/j.jcs.2009.04.010.

14. Guo, M., Y. Jin, J. Du, K. Zhang, et D. Zhao. 2014. « Effects of Wheat Protein Compositions on Malt Quality ». Quality Assurance and Safety of Crops & Foods 6 (1): 73-80. https://doi.org/10.3920/QAS2013.0247.

15. Schmitt, Mark R., et Laurie Marinac. 2008. « Beta-amylase degradation by serine endoproteinases from green barley malt ». Journal of Cereal Science 47 (3): 480-88. https://doi.org/10.1016/j.jcs.2007.06.002.

16. Buttimer, E. T., et D. E. Briggs. 2000. « Mechanisms of the Release of Bound β-Amylase ». Journal of the Institute of Brewing 106 (2): 83-94. https://doi.org/10.1002/1.2050-0416.2000.tb00043.x.

17. A. K. Goswami, M. K. Jain, et B. Paul. 1977. « Alpha- and Beta-Amylases in Seed Germination ». Biologia Plantarum (PRAHA), 1977, sect. 19(6).

18. Ledley, Andrew J., Ryan J. Elias, Helene Hopfer, et Darrell W. Cockburn. 2021. « A Modified Brewing Procedure Informed by the Enzymatic Profiles of Gluten-Free Malts Significantly Improves Fermentable Sugar Generation in Gluten-Free Brewing ». Beverages 7 (3): 53. https://doi.org/10.3390/beverages7030053.

19. French Legistlation. 1993. « Décret n°93-1074 du 13 septembre 1993 pris pour l'application de la loi du 1er août 1905 en ce qui concerne certaines catégories de pains ».

20. Codin6, Georgiana Gabriela, Silvia Mironeasa, et Costel Mironeasa. 2012. « Variability and Relationship among Mixolab and Falling Number Evaluation Based on Influence of Fungal α-Amylase Addition. » Journal of the Science of Food and Agriculture 92 (10): 2162-70. https://doi.org/10.1002/jsfa.5603.

21. Leman, Pedro, Hans Goesaert, Greet E. Vandeputte, Bert Lagrain, et Jan A. Delcour. 2005. « Maltogenic amylase has a non-typical impact on the molecular and rheological properties of starch ». Carbohydrate Polymers 62 (3): 205-13. https://doi.ora/10.1016/j.carbpol.2005.02.023.

22. Hoseney, R.C., et M.L. Martin. 1991. « A Mechanism Bread Firming II. Role of Hydrolyzing enzymes ». Cereal Chemistry, 1991, 68(5) édition.

23. Goesaert, H., K. Brijs, W.S. Veraverbeke, C.M. Courtin, K. Gebruers, et J.A. Delcour. 2005. « Wheat Flour Constituents: How They Impact Bread Quality, and How to Impact Their Functionality ». Trends in Food Science & Technology 16 (1-3): 12-30. https://doi.org/10.1016/j.tifs.2004.02.011.

24. Synowiecki, Jàzef. 2007. « The Use of Starch Processing Enzymes in the Food Industry ». In Industrial Enzymes, édité par Julio Polaina et Andrew P. MacCabe, 19-34. Dordrecht: Springer Netherlands. https-//doi.org/10.1007/1-4020-5377-0_2.

## Claims

1. Malting method for producing a malted flour that is rich in maltogenic enzymes, said method comprising the steps of:

   a) hydration of grains;
   b) germination of hydrated grains;
   c) hydrothermal treatment of germinated grains in water at a temperature ranging from 70 to 90°C and during 1 to 15 minutes;

d) drying the hydrothermally treated grains;

e) grinding the dry germinated grains to obtain a maltogenic enzyme-enriched malted flour, and optionally bran removal of the grains.

2.  Malting method according to claim 2, wherein step a carried out by 3 stages, all ran at 18.5 °C, which are 1. a steeping step during which the grains are immersed in water during 4 hours, 2. a dry step, or aeration step, during which the grains are outside the water and kept moist during 15 hours, and 3. a second steeping step during 3 h.

3.  Malting method according to claim 1 or 2, wherein step b) is carried out for 4 to 8 days at a temperature of 18°C.

4.  Malting method according to any one of claims 1 to 3, wherein step d) is carried out at a temperature ranging from 40 to 82°C during 14 hours.

5.  Method for implementing the method according to any of claims 1 to 4 for producing a pre-dough, said method comprising the steps of:

    a) mixing 10% of starch with excess of water at a temperature ranging from 55 to 65°C during 30 to 60 minutes;
    b) mixing 0,3% of maltogenic enzyme-enriched malted flour obtained by the method according to any one of claims 1 to 4 to the gelatinized starch of step a) at a temperature ranging from 55 to 65°C for a minimum of 80 minutes, to produce the pre-dough.

6.  Method according to claim 5 for producing a bakery product, said method further comprising the steps of:

    c) adding the pre-dough of step b) to the rest of ingredients, to produce a dough;
    d) baking the dough at a temperature ranging from 220 to 350°C during 1 to 20 minutes, to produce the bakery product.

7.  Method according to claim 6, wherein step d) is carried out at a temperature ranging from 220 to 230°C during 15 to 20 minutes, or at a temperature ranging from 300 to 350°C during 1 to 5 minutes, to produce the bakery product.

8.  Method according to any one of claims 1 to 7, wherein the maltogenic enzymes are maltogenic $\alpha$-amylases.

9.  Maltogenic enzyme-enriched malted flour obtained by a malting method according to any one of claims 1 to 4, wherein said malted flour contains 10.36 $\pm$ 3.92 to 18.32$\pm$0.66 U/g of starch of maltogenic enzymes.

10. Use of a maltogenic enzyme-enriched malted flour according to claim 9, for producing a pre-dough.

FIGURE 1

FIGURE 2A

EP 4 681 541 A1

FIGURE 2B

FIGURE 2C

FIGURE 2D

Europäisches
Patentamt

European
Patent Office

Office européen
des brevets

## EUROPEAN SEARCH REPORT

**Application Number**

EP 24 30 6212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 405 624 A (DONCHECK JAMES A [US] ET AL) 11 April 1995 (1995-04-11) | 1-4,8-10 | INV.<br>A21D2/38<br>C12C1/00<br>A21D10/00 |
| A | * the whole document * | 5-7 | |
| X | US 2012/263824 A1 (FINNEY PATRICK L [US]) 18 October 2012 (2012-10-18) | 9,10 | |
| A | * the whole document * | 5-7 | |
| X | US 2024/114938 A1 (SILLICK MATTHEW [US] ET AL) 11 April 2024 (2024-04-11) * the whole document * | 9,10 | |
| X | EP 3 732 279 B1 (CARLSBERG AS [DK]) 30 August 2023 (2023-08-30) * the whole document * | 9 | |

| | | TECHNICAL FIELDS SEARCHED (IPC) |
|---|---|---|
| | | A21D<br>C12C |

The present search report has been drawn up for all claims

| Place of search | Date of completion of the search | Examiner |
|---|---|---|
| The Hague | 13 December 2024 | Piret-Viprey, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 6212

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | | Publication date | Patent family member(s) | Publication date |
|---|---|---|---|---|
| US 5405624 | A | 11-04-1995 | NONE | |
| US 2012263824 | A1 | 18-10-2012 | NONE | |
| US 2024114938 | A1 | 11-04-2024 | NONE | |
| EP 3732279 | B1 | 30-08-2023 | BR 112020013341 A2 | 01-12-2020 |
| | | | CA 3086078 A1 | 04-07-2019 |
| | | | CN 111527192 A | 11-08-2020 |
| | | | CO 2020007640 A2 | 31-08-2020 |
| | | | EA 202091485 A1 | 20-10-2020 |
| | | | EP 3732279 A1 | 04-11-2020 |
| | | | JP 7399861 B2 | 18-12-2023 |
| | | | JP 2021508473 A | 11-03-2021 |
| | | | JP 2023139255 A | 03-10-2023 |
| | | | UA 128208 C2 | 08-05-2024 |
| | | | US 2021062120 A1 | 04-03-2021 |
| | | | WO 2019129724 A1 | 04-07-2019 |
| | | | ZA 202003844 B | 20-12-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **COLLADO** ; **LILIA S.** ; **HAROLD CORKE**. Accurate estimation of sweetpotato amylase activity by flour viscosity analysis. *Journal of Agricultural and Food Chemistry*, 1999, vol. 47 (3), 832-35, https://doi.org/10.1021/jf980432h
- **FEILLET, PIERRE**. Le grain de blé. *INRA*, 1996
- **CAUVAIN, STANLEY.** Technology of Breadmaking.. Springer International Publishing, 2015
- **CHRISTOPHERSEN** ; **CLAUS** ; **DANIEL OTZEN** ; **BARRIE NORMAN** ; **SOREN CHRISTENSEN** ; **THOMAS SCHAFER**. *Enzymatic Characterisation of Novamyl®, a Thermostable $\alpha$-Amylase*, 1998, 39-45
- **BOWLES, L.K.** Baked goods freshness : technology, evaluation, and inhibition of staling. Marcel Dekker., 1996
- **GRAY, J.A.** ; **J.N. BEMILLER.** Bread Staling: Molecular Basis and Control. *Comprehensive Reviews in Food Science and Food Safety*, 2003, vol. 2 (1), 1-21, https://doi.ora/10.1111/j.1541-4337.2003.tb00011.x.
- Bakery Products: Science and Technology. **LAI, H.-M** ; **T.-C. LIN**. Bakery Products. Blackwell Publishing, 2006, 3-68
- **CHEN, YI** ; **SEVERIN EDER** ; **SIDONIA SCHUBERT** ; **SARAH GORGERAT** ; **ELENA BOSCHET** ; **LIVIA BALTENSPERGER** ; **ELENA BOSCHET et al.** Influence of Amylase Addition on Bread Quality and Bread Staling. *ACS Food Science & Technology*, 2021, vol. 1 (6), 1143-50, https://doi.org/10.1021/acsfoodscitech.1c00158.
- **HERZ, KARL.** Staling of bread, a review. *Food Techonology,*, 1965, 90-103
- **POTUS, JACQUES.** *Study of enzymatic hydrolisis oxidation during kneading of dough made from soft wheat*, 1997
- **HORVÁTHOVÁ, VIERA** ; **STEFAN JANEČEK** ; **ERNEST ŠTURDÍK**. *Amylolytic enzymes: their specificities, origins and properties*, 2000, vol. 55, 605-15
- Endogenous Hydrolyzing: Isolation, Characterization, and Applications in Biological Processes. **KHATTAK** ; **WALEED AHMAD** ; **MAZHAR UI-ISLAM** ; **MUHAMMAD WAJID ULLAH** ; **SHAUKAT KHAN** ; **JOONG KON PARK**. Polysaccharides. Springer International Publishing, 2014, 1-38
- **GOESAERT, HANS** ; **LOUISE SLADE** ; **HARRY LEVINE** ; **JAN A. DELCOUR.** Amylases and bread firming - an integrated view. *Journal of Cereal Science*, 2009, vol. 50 (3), 345-52, https://doi.org/10.1016/j.jcs.2009.04.010
- **GUO, M.** ; **Y. JIN** ; **J. DU** ; **K. ZHANG** ; **D. ZHAO.** Effects of Wheat Protein Compositions on Malt Quality. *Quality Assurance and Safety of Crops & Foods*, 2014, vol. 6 (1), 73-80, https://doi.org/10.3920/QAS2013.0247
- **SCHMITT** ; **MARK R** ; **LAURIE MARINAC**. Beta-amylase degradation by serine endoproteinases from green barley malt. *Journal of Cereal Science*, 2008, vol. 47 (3), 480-88, https://doi.org/10.1016/j.jcs.2007.06.002.
- **BUTTIMER, E. T.** ; **D. E. BRIGGS**. Mechanisms of the Release of Bound $\beta$-Amylase. *Journal of the Institute of Brewing*, 2000, vol. 106 (2), 83-94, https://doi.org/10.1002/1.2050-0416.2000.tb00043.x.
- **A. K. GOSWAMI** ; **M. K. JAIN** ; **B. PAUL.** Alpha- and Beta-Amylases in Seed Germination. *Biologia Plantarum (PRAHA)*, 1977 (6), 1977
- **LEDLEY** ; **ANDREW J.** ; **RYAN J. ELIAS** ; **HELENE HOPFER** ; **DARRELL W. COCKBURN.** A Modified Brewing Procedure Informed by the Enzymatic Profiles of Gluten-Free Malts Significantly Improves Fermentable Sugar Generation in Gluten-Free Brewing. *Beverages*, 2021 (3), 53, https://doi.org/10.3390/beverages7030053
- Décret n°93-1074 du 13 septembre 1993 pris pour l'application de la loi du 1er août 1905 en ce qui concerne certaines catégories de pains. *French Legistlation. 1993*
- **CODIN6** ; **GEORGIANA GABRIELA** ; **SILVIA MIRONEASA** ; **COSTEL MIRONEASA**. Variability and Relationship among Mixolab and Falling Number Evaluation Based on Influence of Fungal $\alpha$-Amylase Addition.. *Journal of the Science of Food and Agriculture*, 2012, vol. 92 (10), 2162-70, https://doi.org/10.1002/jsfa.5603
- **LEMAN, PEDRO** ; **HANS GOESAERT** ; **GREET E. VANDEPUTTE** ; **BERT LAGRAIN** ; **JAN A. DELCOUR**. Maltogenic amylase has a non-typical impact on the molecular and rheological properties of starch. *Carbohydrate Polymers*, 2005, vol. 62 (3), 205-13, https://doi.ora/10.1016/j.carbpol.2005.02.023

- **HOSENEY, R.C.** ; **M.L. MARTIN**. A Mechanism Bread Firming II. Role of Hydrolyzing enzymes. *Cereal Chemistry*, 1991, vol. 68 (5), 1991

- **GOESAERT, H** ; **K. BRIJS** ; **W.S. VERAVERBEKE** ; **C.M. COURTIN** ; **K. GEBRUERS** ; **J.A. DELCOUR**. Wheat Flour Constituents: How They Impact Bread Quality, and How to Impact Their Functionality. *Trends in Food Science & Technology*, 2005, vol. 16 (1-3), 12-30, https://doi.org/10.1016/j.tifs.2004.02.011.

- The Use of Starch Processing Enzymes in the Food Industry. **SYNOWIECKI, JÀZEF.** Industrial Enzymes. Springer Netherlands, 2007, 19-34